# EUROPEAN PATENT SPECIFICATION

(11) **EP 2 628 325 B1**
(45) Date of publication and mention of the grant of the patent: **02.04.2014**
(21) Application number: 11799201.6
(22) Date of filing: 22.09.2011
(51) Int. Cl.: H04W 8/02

(54) **METHOD AND NETWORK NODE**
VERFAHREN UND NETZWERKKNOTEN
PROCÉDÉ ET NOEUD DE RÉSEAU

(30) Priority: 12.10.2010 US 392093 P
(43) Date of publication of application: 21.08.2013
(73) Proprietor: Telefonaktiebolaget L M Ericsson (publ), 164 83 Stockholm (SE)
(72) Inventor: EHRENHOLM, Bo, SE-583 37 Linköping (SE); KELLER, Ralf, DE-52146 Würselen (DE); SCHLIWA-BERTLING, Paul, SE-590 71 Ljungsbro (SE)
(74) Representative: Kühn, Friedrich Heinrich
(86) International application number: PCT/SE2011/051134
(87) International publication number: WO 2012/050505

(56) References cited:
- WO-A1-00/21319
- WO-A1-03/001830

## Description

### TECHNICAL FIELD

The present disclosure relates to a network node and a method in the network node. In particular, it relates to identification of a serving GPRS support node of a mobile station.

### BACKGROUND

Mobile stations (MS), such as e.g. User Equipment (UE), also known as wireless terminals and/or mobile terminals are enabled to communicate wirelessly in a wireless communication system, sometimes also referred to as a cellular radio system. The communication may be made e.g. between two mobile stations, between a mobile station and a regular telephone and/or between a mobile station and a server via a Radio Access Network (RAN) and possibly one or more core networks.

The mobile station may further be referred to as mobile telephones, cellular telephones, e-readers, laptops with wireless capability etc. The mobile station in the present context may be, for example, portable, pocket-storable, hand-held, computer-comprised, or vehicle-mounted mobile devices, enabled to communicate voice and/or data wirelessly, via the radio access network, with another entity, such as another mobile station or a server.

However, the wireless communication system herein discussed may comprise a base station e.g. a Radio Base Station (RBS), which in some networks may be referred to as "eNB", "eNodeB", "NodeB" or "B node", depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells, such as e.g. three cells. The network nodes communicate over the air interface operating on radio frequencies with the mobile station within range of the respective base station, i.e. situated within a cell served by the base station.

In some radio access networks, several base stations may be connected, e.g. by landlines or wirelessly, e.g. by microwave, to a controlling network node, such as a Radio Network Controller (RNC) e.g. in Universal Mobile Telecommunications System (UMTS). The RNC, also sometimes termed a Base Station Controller (BSC) e.g. in GSM, may supervise and coordinate various activities of the plural base stations connected thereto. GSM is an abbreviation for Global System for Mobile Communications (originally: Groupe Spécial Mobile).

In 3rd Generation Partnership Project (3GPP) Long Term Evolution (LTE), base stations, which may be referred to as eNodeBs or even eNBs, may be connected to a gateway e.g. a radio access gateway, to one or more core networks.

UMTS is a third generation mobile communication system, which evolved from the GSM, and is intended to provide improved mobile communication services based on Wideband Code Division Multiple Access (WCDMA) technology. UMTS Terrestrial Radio Access Network (UTRAN) is essentially a radio access network using wideband code division multiple access for user equipment units. The 3GPP has undertaken to evolve further the UTRAN and GSM based radio access network technologies.

The 3GPP is responsible for the standardization of GSM, UMTS, LTE and LTE-Advanced. LTE is a technology for realizing high-speed packet-based communication that may reach high data rates both in the downlink and in the uplink, and is thought of as a next generation mobile communication system relative UMTS.

In the present context, the expressions downlink, downstream link or forward link may be used for the transmission path from the base station to the mobile station. The expression uplink, upstream link or reverse link may be used for the transmission path in the opposite direction i.e. from the mobile station to the base station.

3GPP SA2 is a second stage development of the 3GPP network. Based on the services requirements elaborated by 3GPP SA1, SA2 identifies the main functions and entities of the network, how these entities are linked to each other and the information they exchange. The output of SA2 is used as input by the groups in charge of the definition of the precise format of messages in Stage 3 (Stage 2 for the Radio Access Network is under TSG RAN's responsibility). The 3GPP SA2 concept has a system-wide view, and decides on how new functions integrate with the existing network entities.

Another network node comprised in some wireless communication systems is the Mobile Switching Centre (MSC). The mobile switching centre is the primary service delivery node for GSM/CDMA, responsible for routing voice calls and SMS as well as other services such as e.g. conference calls, fax and circuit switched data.

The mobile switching centre may set up and release the end-to-end connection, handles mobility and hand-over requirements during the call and may take care of charging and real time pre-paid account monitoring.

In a GPRS network, a Serving GPRS Support Node (SGSN) is responsible for the delivery of data packets from and to the mobile stations within its geographical service area. Its tasks may comprise packet routing and transfer, mobility management such as attach/ detach and location management, logical link management, authentication and charging functions, for example. The location register of the SGSN may store location information such as e.g., current cell, and user profiles used in the packet data network, of GPRS users registered with the SGSN.

Single Radio Voice Call Continuity (SRVCC) is an LTE functionality to provide continuity when a mobile station moves from E-UTRAN/HSPA to UTRAN/GERAN while engaged in a voice call.

In order to provide continuity when a mobile station moves in the reverse direction, i.e. from UTRAN/GERAN to E-UTRAN/HSPA, a corresponding functionality called reverse SRVCC (rSRVCC) may assist. The reversed SRVCC is sometimes also referred to as a handback of the mobile station.

For the SRVCC return direction, rSRVCC work in 3GPP SA2, as documented in TR 23.885: Feasibility Study of Single Radio Voice Call Continuity (SRVCC) from UTRAN/GERAN to E-UTRAN/HSPA, the question was raised on how the MSC Server can find the Source SGSN in a reliable way.

The mobile station is IP Multimedia System (IMS) registered over the Packet Switched (PS) access, hence has at least one packet switched bearer for Session Initiation Protocol (SIP) signalling. Depending on the radio access capabilities, this bearer might be suspended during an active Circuit Switched (CS) call. Hence the mobile station has performed attached to a SGSN, called source SGSN. During handover from GSM to LTE, the MSC server has to send a SRVCC CS to PS handover command to the source SGSN. To be able to select the source SGSN, the MSC Server must have received the current source SGSN identity. Today, no solution exists how the MSC Server may receive the identity of the current source SGSN.

Some possible solutions to this problem has been discussed in "TD S2-104917 ; 3GPP TSG SA WG2 Meeting #81; 11 Oct. - 15 Oct. 2010, Prague, CZ"

However, the Home Subscriber Server (HSS) might not have the correct SGSN address, e.g. in case SRVCC from E-UTRAN to GERAN has been performed and the mobile station has not performed RAU, handover back to E-UTRAN has to be performed.

Provisioning of the SGSN identity via ISD also suffers from the problem that the mobile station may not have performed RAU after SRVCC from E-UTRAN to GERAN.

Thus, a problem that may occur when the mobile station is to be handed back from a UTRAN/GERAN radio access network to an E-UTRAN/HSPA radio access network is that the MSC server may not know, or be able to find out the source SGSN of the mobile station in a reliable way. Another example is found in document WO0021319, NOKIA, Haumont Serge, 13-4-2000.

### SUMMARY

It is therefore an object to obviate at least some of the above mentioned disadvantages and to improve the performance in a wireless communication system.

According to a first aspect, the object is achieved by a method in a first network node. The method aims at identifying a serving General Packet Radio Services (GPRS) support node (SGSN) of a mobile station. The method comprises acquiring of a Temporary Link Layer Identifier (TLLI). Further, the method also comprises identifying the SGSN of the mobile station by deriving the identity of the SGSN from the acquired TLLI.

According to a second aspect, the object is achieved by a first network node. The first network node aims at identifying an SGSN of a mobile station. The first network node comprises a receiver, configured for acquire a TLLI. Also, the first network node comprises a processing circuitry, configured for identifying the SGSN of the mobile station by deriving the identity of the SGSN from the acquired TLLI.

Thanks to embodiments of the methods and network nodes disclosed herein, the identity of the serving SGSN of the mobile station may be provided to the Mobile Switching Centre in a reliable manner. The mobile station stores the TLLI as the SGSN identity, and may provide the TLLI to a controlling network node. The controlling network node may then provide either the TLLI to the mobile switching centre and thereby enable the mobile switching centre to extract the SGSN identity, or extract the SGSN identity from the TLLI and provide the SGSN identity to the Mobile Switching Centre. Thereby is the SGSN identity of a mobile station provided to the Mobile Switching Centre in a reliable way, enabling rSRVCC handback of the mobile station.

An advantage of embodiments described herein is that it provides this feature without any specific changes to the existing network architecture or infrastructure, or even to existing protocols in use, according to some embodiments. Thereby, an improved performance within the wireless communication system is achieved.

Other objects, advantages and novel features will become apparent from the following detailed description of the present method and network node.

### BRIEF DESCRIPTION OF THE DRAWINGS

The methods and network nodes are described in more detail with reference to attached drawings illustrating exemplary embodiments in which:
- Figure 1: is a schematic illustration of a wireless communication system for communicating data between network nodes, according to some embodiments.
- Figure 2A: is a combined flow chart and block diagram illustrating an example of an embodiment of the present methods.
- Figure 2B: is a combined flow chart and block diagram illustrating an example of an embodiment of the present methods.
- Figure 3: is a flow chart illustrating an example of an embodiment of a method in a network node.
- Figure 4A: is a block diagram illustrating an example of an embodiment of a network node.
- Figure 4B: is a block diagram illustrating an example of an embodiment of a network node.
- Figure 5: is a combined flow chart and block diagram illustrating an example of an embodiment of the present methods.

### DETAILED DESCRIPTION

Embodiments herein are defined as a network node and a method in a network node, which may be put into practice in the embodiments described below. These embodiments may, however, be exemplified and realised in many different forms and are not to be considered as limited to the embodiments set forth herein; rather, these embodiments are provided so that this disclosure will be thorough and complete.

Still other objects and features may become apparent from the following detailed description considered in conjunction with the accompanying drawings. It is to be understood, however, that the drawings are designed solely for purposes of illustration and not as a definition of the limits of the herein disclosed embodiments, for which reference is to be made to the appended claims. It is further to be understood that the drawings are not necessarily drawn to scale and that, unless otherwise indicated, they are merely intended to conceptually illustrate the structures and procedures described herein.

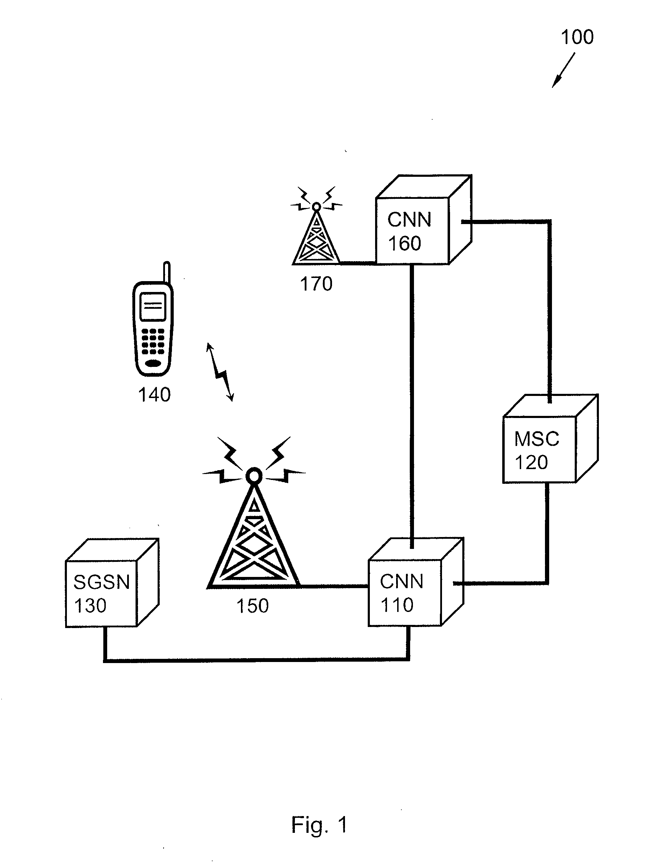

Figure 1 depicts a wireless communication system 100. The wireless communication system 100 may at least partly be based on radio access technologies such as e.g. 3GPP LTE, LTE-Advanced, Evolved Universal Terrestrial Radio Access Network (E-UTRAN), UMTS, GSM/ Enhanced Data rate for GSM Evolution (GSM/EDGE), Wideband Code Division Multiple Access (WCDMA), Worldwide Interoperability for Microwave Access (WiMax), or Ultra Mobile Broadband (UMB), High Speed Packet Access (HSPA), Evolved Universal Terrestrial Radio Access (E-UTRA), Universal Terrestrial Radio Access (UTRA), GSM EDGE Radio Access Network (GERAN), 3GPP2 CDMA technologies e.g. CDMA2000 1x RTT and High Rate Packet Data (HRPD), just to mention some few options. The wireless communication system 100 may comprise a heterogeneous or homogeneous network, according to different embodiments.

The wireless communication system 100 may be configured to operate according to the Time Division Duplex (TDD) and/or the Frequency Division Duplex (FDD) principle, according to different embodiments.

TDD is an application of time-division multiplexing to separate uplink and downlink signals in time, possibly with a guard period situated in the time domain between the uplink and downlink signalling. FDD means that the transmitter and receiver operate at different carrier frequencies.

The purpose of the illustration in Figure 1 is to provide a general overview of the methods and network nodes herein described, and the functionalities involved. The methods and network nodes will subsequently, as a non-limiting example, be described in an environment comprising a plurality of radio access technologies such as e.g. UTRAN, GERAN, E-UTRAN and/or HSPA, but the embodiments of the disclosed methods and network nodes may operate in a wireless communication system 100 based on another radio access technology.

The wireless communication system 100 comprises a first base station 150, which is serving a cell, wherein a mobile station 140 may be situated. Further, a first control network node (CNN) 110, configured to control the first radio base station 150. Further, the wireless communication system 100 comprises a Serving GPRS Support Node (SGSN) 130 of the mobile station 140. In addition, the wireless communication system 100 comprises a Mobile Switching Centre (MSC) 120. Further, a second base station 170 and/or a second control network node 160 may be comprised in the wireless communication system 100, according to some embodiments.

The base station 150, 170 may according to some embodiments be referred to as e.g. radio base station, NodeB, evolved Node B (eNB, or eNode B), base transceiver station, Access Point Base Station, base station router, macro base station, micro base station, pico base station, femto base station, Home eNodeB, sensor, beacon device, or any other network node configured for communication with the mobile station 140 over a wireless interface, depending e.g. of the radio access technology and terminology used.

The mobile station 140 is configured to transmit radio signals comprising information to be received by the serving base station 150. The mobile station 140 is also configured to receive radio signals comprising information transmitted by the serving base station 150. The communication between the serving base station 150 and the mobile station 140 is thus made over a radio link.

The mobile station 140 may be represented by e.g. a wireless communication terminal, a mobile cellular phone, a Personal Digital Assistant (PDA), a wireless platform, a user equipment (UE), a portable communication device, a laptop, a computer, a wireless terminal acting as a mobile relay, a Customer Premises Equipment (CPE), a Fixed Wireless Access (FWA) node or any other kind of device configured to communicate wirelessly via the serving base station 150.

The serving base station 150 controls the radio resource management within the cell, such as e.g. allocating radio resources to mobile station 140 within the cell and ensuring reliable wireless communication link between the base station 150, 170 and the mobile station 140. The base station 150, 170 may comprise an eNodeB, e.g. in an LTE-related wireless communication system 100.

The controlling network node 110, 160 is a governing network node in the radio access network, connected to and responsible for a plurality of base stations 150, 170. The controlling network node 110, 160 may be referred to as a Radio Network Controller (RNC), in the UMTS radio access network (UTRAN). The controlling network node 110, 160 may further comprise a Base Station Controller (BSC) in a GPRS radio access network.

It is an aspect of some embodiments to overcome the deficiencies described above by deriving and transferring an SGSN identity to the mobile switching centre 120 for circuit switched connections. According to some embodiments, an identity value such as a Temporary Logical Link Identifier (TLLI) is transferred from the mobile station 140 via the Controlling Network Node 110, 160 to the circuit switched domain.

The TLLI provides the signalling address used for communication between the mobile station 140 and the Serving GPRS Support Node 130 in a GSM and/or GPRS environment.

The Controlling Network Node 110, 160 may receive the TLLI from the mobile station 140, derive the SGSN identity from the TLLI and may inform the mobile switching centre 120 about the current source SGSN identity associated with the mobile station 140, when needed.

As an alternative solution according to some embodiments, the Controlling Network Node 110, 160 may inform the mobile switching centre 120 about the current TLLI and the mobile switching centre 120 may derive the SGSN identity from the TLLI.

It is an advantage of the present embodiments that they provide means for the mobile switching centre 120 to select the correct source SGSN 130 at e.g. GSM to LTE handover.

These and other features of embodiments disclosed herein will be further explained in more detail subsequently.

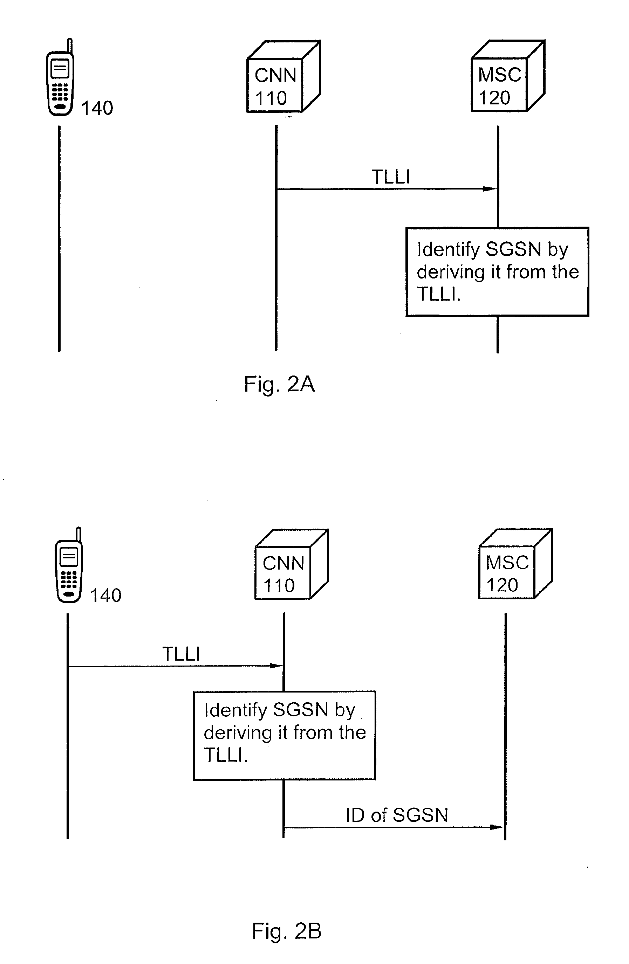

**Figure 2A** is a combined flowchart and block diagram illustrating an overview of an exemplary, non- limiting embodiment of a method in a first network node comprising a mobile switching centre 120, for identifying a serving GPRS support node 130 of a mobile station 140.

The method comprises a first action of transmitting a TLLI, associated with the mobile station 140, from the controlling network node 110 to the mobile switching centre 120. According to some embodiments, the TLLI may be transmitted to the mobile switching centre 120 as the mobile station 140 accesses a circuit switched domain in the wireless communication network 100.

Further, in a second action, the mobile switching centre 120 may derive the identity of the serving GPRS support node 130 of the mobile station 140, from the TLLI.

**Figure 2B** is a combined flowchart and block diagram illustrating an overview of another exemplary, non- limiting embodiment of a method in a first network node comprising a controlling network node 110, for identifying a serving GPRS support node 130 of a mobile station 140.

The method comprises a first action of transmitting a TLLI, associated with the mobile station 140, from the mobile station 140 to the controlling network node 110. According to some embodiments, the TLLI is transmitted to the mobile switching centre 120 as the mobile station 140 accesses a circuit switched domain in the wireless communication network 100.

Further, in a second action, the controlling network node 110 may derive the identity of the serving GPRS support node 130 of the mobile station 140 from the TLLI.

Thereafter, in a subsequent third action, the derived identity of the serving GPRS support node 130 of the mobile station 140 may be transmitted to the mobile switching centre 120.

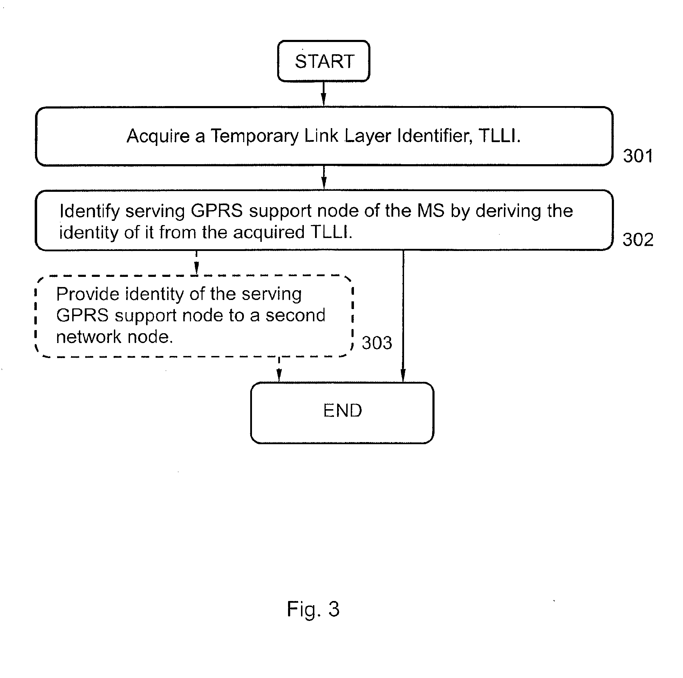

**Figure 3** is a flow chart illustrating embodiments of a method in a first network node 110, 120. The method aims at identifying a serving GPRS support node 130 of a mobile station 140.

The first network node 110, 120 may be a Mobile Switching Centre 120 according to some embodiments.

However, according to other embodiments, the first network node 110, 120 may comprise a controlling network node 110 of the mobile station 140, such as a Base Station Controller or a Radio Network Controller.

To appropriately identifying the serving GPRS support node 130 of the mobile station 140, the method may comprise a number of actions 301-303.

It is however to be noted that some of the described actions, e.g. action 301-303 may be performed simultaneously or in a somewhat rearranged chronological order. Also, it is to be noted that some of the actions may be performed within some alternative embodiments, such as e.g. action 303. The method may comprise the following actions:

### Action 301

A Temporary Link Layer Identifier, TLLI, is acquired.

The TLLI may be acquired, such as received, from a controlling network node 110 of the mobile station 140, such as a Base Station Controller or a Radio Network Controller, in case the first network node is a Mobile Switching Centre 120, according to some embodiments.

However, the TLLI may be acquired, such as received, from the mobile station 140, in case the first network node is a controlling network node 110 of the mobile station 140, such as a Base Station Controller or a Radio Network Controller and the second network node 120 is a Mobile Switching Centre 120, according to some embodiments.

Further, according to some embodiments, the TLLI may be acquired, i.e. received, as the mobile station 140 accesses a circuit switched domain. The TLLI may further be comprised in any of a radio resource control protocol, or a mobility management layer protocol according to some embodiments.

According to some embodiments, the controlling network node 110 of the mobile station 140 may be configured to receive and store the latest TLLI of the mobile station 140 during a circuit switched connection.

### Action 302

The serving GPRS support node 130 of the mobile station 140 is identified by deriving the identity of the serving GPRS support node 130 from the acquired 301 TLLI.

According to some embodiments, the controlling network node 110 of the mobile station 140 may identify the serving GPRS support node 130 of the mobile station 140 by using the serving GPRS support node selection method.

### Action 303

This action may be comprised within some alternative embodiments, wherein the first network node 110, 120 comprises a controlling network node 110, but not necessarily within other embodiments of the method.

The identity of the serving GPRS support node 130 may be provided, such as transmitted, to a second network node 120.

The second network node 120 may be a Mobile Switching Centre 120, according to some embodiments, wherein action 303 may be performed.

The identity of the serving GPRS support node 130 may be provided such as sent, transmitted or delivered to the Mobile Switching Centre 120 when a handover of the mobile station 140 may be made to packet access such as e.g. to LTE, or to HSPA, according to some embodiments.

Further, the identity of the serving GPRS support node 130 may be provided to the Mobile Switching Centre 120 in an information element comprised in any of a handover required message or relocation required message, according to different embodiments.

The identity of the serving GPRS support node 130 may be distributed from the serving controlling network node 110 of the mobile station 140, to the target controlling network node 160 when the mobile station 140 is performing an inter controlling network node handover, according to some embodiments.

The identity of the serving GPRS support node 130 may be comprised in a handover required message, a relocation required message, a handover request message, and/or a relocation request message according to different alternative embodiments.

The Mobile Switching Centre 120 may be configured for utilising the identity of the serving GPRS support node 130 of the mobile station 140 during reverse single radio voice call continuity from a Radio Access Network based on Global System for Mobile Communications, GSM, or Universal Mobile Telecommunications System, UMTS, to a Radio Access Network based on Long Term Evolution, LTE.

The radio access networks may comprise a circuit switched access technology, such as GSM EDGE Radio Access Network, GERAN, or Universal Terrestrial Radio Access Network, UTRAN, and a packet switched access technology, such as evolved UTRAN, EUTRAN, respectively, according to different embodiments.

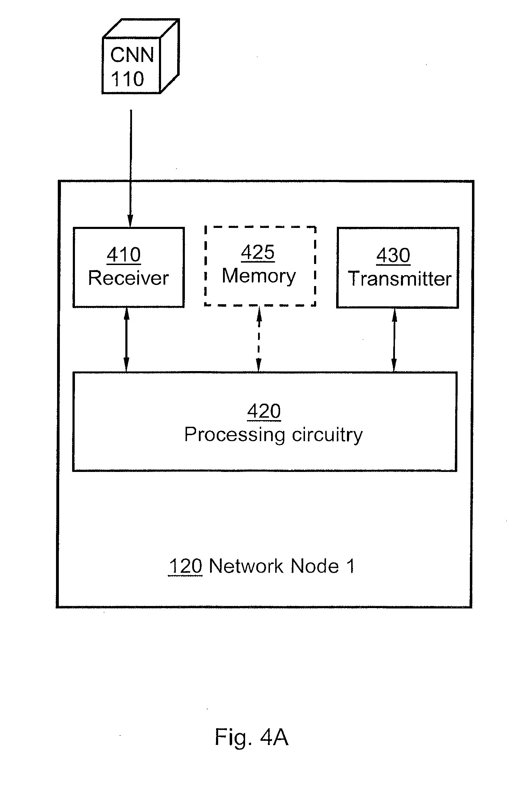

**Figure 4A** is a block diagram illustrating a first network node 120, comprising a mobile switching centre 120. The first network node 120 may be configured to perform any, some or all of the previously described actions 301-302 for determining a serving GPRS support node 130 of a mobile station 140.

For the sake of clarity, any internal electronics or other components of the first network node 120, i.e. the mobile switching centre 120, not completely indispensable for understanding the disclosed method has been omitted from Figure 4A.

In order to perform the actions 301-302 correctly, the first network node 120 comprises a receiver 410. The receiver 410 is configured for acquiring a TLLI. The receiver 410 may be configured for acquiring the TLLI as the mobile station 140 accesses a circuit switched domain, according to some embodiments.

The TLLI may be comprised in any of a radio resource control protocol or a mobility management layer protocol, according to different embodiments.

Also, the first network node 120 comprises a processing circuitry 420. The processing circuitry 420 is configured for identifying the serving GPRS support node 130 of the mobile station 140 by deriving the identity of the serving GPRS support node 130 from the acquired TLLI.

The first network node 120, may according to some embodiments further comprise a transmitter 430. The transmitter 430 may be configured for transmitting wired or wireless signals, according to some embodiments.

According to some embodiments, wherein the first network node 120 comprises a Mobile Switching Centre 120, the receiver 410 may be configured for acquiring the TLLI from a controlling network node 110 of the mobile station 140, such as a Base Station Controller or a Radio Network Controller.

The identity of the serving GPRS support node 130 may according to different embodiments be comprised in any of a handover required message, a relocation required message, a handover request message, and/or a relocation request message.

In addition, the Mobile Switching Centre 120 may be configured for utilising the identity of the serving GPRS support node 130 of the mobile station 140 during reverse single radio voice call continuity (rSRVCC) from a Radio Access Network based on circuit switched access technology, such as Global System for Mobile Communications, GSM, or Universal Mobile Telecommunications System, UMTS, to a Radio Access Network based on a packet switched access technology, such as Long Term Evolution, LTE.

Thus the herein discussed Radio Access Networks may comprise a circuit switched access technology, such as GSM EDGE Radio Access Network, GERAN, or Universal Terrestrial Radio Access Network, UTRAN, and a packet switched access technology, such as evolved UTRAN, EUTRAN, respectively.

The first network node 120, or the mobile switching centre 120 as it also may be referred to according to some embodiments, may further comprise a memory 425, according to some embodiments. The memory 425 may be configured to store data, such as e.g. the received identity of the serving GPRS support node 130 of the mobile station 140, and/or other information that may serve or enable the herein discussed methods, according to some embodiments.

The processing circuitry 420 may comprise e.g. one or more instances of a Central Processing Unit (CPU), a processing unit, a processor, a microprocessor, or other processing logic that may interpret and execute instructions. The processing circuitry 420 may further perform data processing functions for inputting, outputting, and processing of data comprising data buffering and device control functions, such as call processing control, user interface control, or the like.

Further, it is to be noted that some of the described units 410-430 comprised within the first network node 120 in the wireless communication system 100 are to be regarded as separate logical entities but not with necessity separate physical entities.

The actions 301-302 to be performed in the first network node 120, or Mobile Switching Centre 120 as it may be, may be implemented through one or more processing circuitry 420 in the first network node 120, together with computer program code for performing any, some or all of the functions of the actions 301-302 described above. Thus a computer program product, comprising instructions for performing the actions 301-302 in the first network node 120 may identify a serving General Packet Radio Services, GPRS, support node 130 of a mobile station 140, when being loaded into the one or more processing circuitry 420.

The computer program product mentioned above may be provided for instance in the form of a data carrier carrying computer program code for performing at least some of the actions 301-302 according to some embodiments when being loaded into the processing circuitry 420. The data carrier may comprise e.g. a hard disk, a CD ROM disc, a memory stick, an optical storage device, a magnetic storage device or any other appropriate medium comprising a persistent or non-persistent memory such as a disk or tape that may hold machine readable data. The computer program product may furthermore be provided as computer program code on a server and downloaded to the first network node 120 remotely, e.g. over an Internet or an intranet connection.

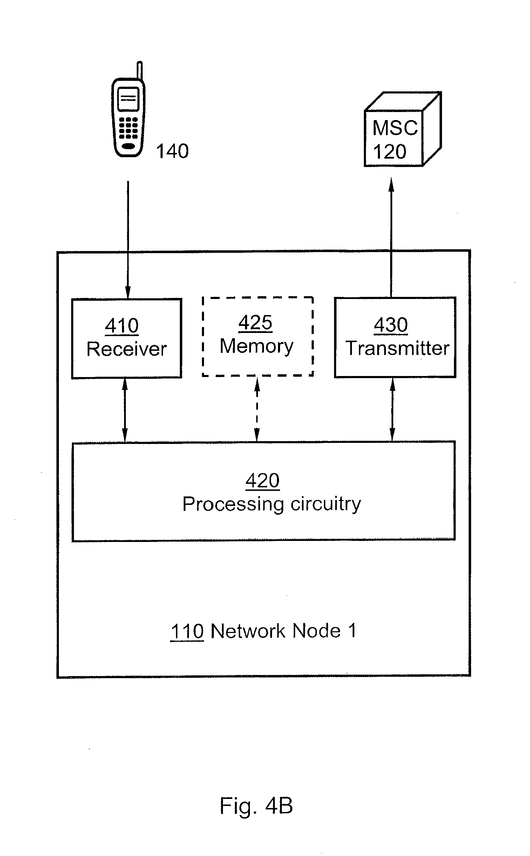

**Figure 4B** is a block diagram illustrating a first network node 110, comprising a Controlling network node 110, such as e.g. a Base Station Controller (BSC) or a Radio Network Controller (RNC). The first network node 110 may be configured to perform any, some or all of the previously described actions 301-303 for determining a serving GPRS support node 130 of a mobile station 140.

For the sake of clarity, any internal electronics or other components of the first network node 110, i.e. the controlling network node 110, not completely indispensable for understanding the disclosed method has been omitted from Figure 4B.

In order to perform the actions 301-303 correctly, the first network node 110 comprises a receiver 410. The receiver 410 is configured for acquiring a TLLI. The receiver 410 may be configured for acquiring the TLLI as the mobile station 140 accesses a circuit switched domain, according to some embodiments.

The TLLI may be comprised in any of a radio resource control protocol or a mobility management layer protocol, according to different embodiments.

Also, the first network node 110 comprises a processing circuitry 420. The processing circuitry 420 is configured for identifying the serving GPRS support node 130 of the mobile station 140 by deriving the identity of the serving GPRS support node 130 from the acquired TLLI.

The processing circuitry 420 of the controlling network node 110 of the mobile station 140 may be configured to identify the serving GPRS support node 130 of the mobile station 140 by using the serving GPRS support node selection method, according to some embodiments.

The first network node 110 may according to some embodiments further comprise a transmitter 430. The transmitter 430 may be configured for providing the identity of the serving GPRS support node 130 to a second network node 120, by transmissions made over a wireless, or wired connection.

The transmitter 430 of the controlling network node 110 of the mobile station 140 may be configured to provide the identity of the serving GPRS support node 130 to the Mobile Switching Centre 120 when a handover of the mobile station 140 is made to a packet switched network such as e.g. LTE or HSPA, according to some embodiments.

According to some embodiments, the first network node 110 may comprise a controlling network node 110 of the mobile station 140, such as a BSC or a RNC, and the second network node 120 may comprise a Mobile Switching Centre 120. According to at least some of those embodiments, the receiver 410 of the first network node 110 may be configured for acquiring the TLLI from the mobile station 140.

The controlling network node 110 of the mobile station 140 may according to some embodiments be configured to receive and store the latest TLLI of the mobile station 140 during a circuit switched connection.

According to some embodiments, the transmitter 430 of the controlling network node 110 of the mobile station 140 may be configured to provide the identity of the serving GPRS support node 130 to the Mobile Switching Centre 120 in an information element comprised in any of a handover required message, or a relocation required message.

Furthermore, the transmitter 430 of the serving controlling network node 110 of the mobile station 140 may be configured to distribute the identity of the serving GPRS support node 130 of the mobile station 140 to the target controlling network node 160 when the mobile station 140 is performing an inter controlling network node handover, according to some embodiments.

The identity of the serving GPRS support node 130 may according to different embodiments be comprised in any of a handover required message, a relocation required message, a handover request message, and/or a relocation request message.

In addition, the first network node 110, 120 may be configured for utilising the identity of the serving GPRS support node 130 of the mobile station 140 during reverse single radio voice call continuity (rSRVCC) from a Radio Access Network based on circuit switched access technology, such as Global System for Mobile Communications, GSM, or Universal Mobile Telecommunications System, UMTS, to a Radio Access Network based on a packet switched access technology, such as Long Term Evolution, LTE.

Thus the herein discussed Radio Access Networks may comprise a circuit switched access technology, such as GSM EDGE Radio Access Network, GERAN, or Universal Terrestrial Radio Access Network, UTRAN, and a packet switched access technology, such as evolved UTRAN, EUTRAN, respectively.

The first network node 110, or the controlling network node 110 as it also may be referred to according to some embodiments, may further comprise a memory 425, according to some embodiments. The memory 425 may be configured to store data, such as e.g. the received identity of the serving GPRS support node 130 of the mobile station 140, and/or other information that may serve or enable the herein discussed methods, according to some embodiments.

The processing circuitry 420 may comprise e.g. one or more instances of a Central Processing Unit (CPU), a processing unit, a processor, a microprocessor, or other processing logic that may interpret and execute instructions. The processing circuitry 420 may further perform data processing functions for inputting, outputting, and processing of data comprising data buffering and device control functions, such as call processing control, user interface control, or the like.

Further, it is to be noted that some of the described units 410-430 comprised within the first network node 110 in the wireless communication system 100 are to be regarded as separate logical entities but not with necessity separate physical entities.

The actions 301-303 to be performed in the first network node 110, or controlling network node 110 as it may be, may be implemented through one or more processing circuitry 420 in the first network node 110, together with computer program code for performing any, some or all of the functions of the actions 301-303 described above. Thus a computer program product, comprising instructions for performing the actions 301-303 in the first network node 110 may identify a serving GPRS support node 130 of a mobile station 140, when being loaded into the one or more processing circuitry 420.

The computer program product mentioned above may be provided for instance in the form of a data carrier carrying computer program code for performing at least some of the actions 301-303 according to some embodiments when being loaded into the processing circuitry 420. The data carrier may comprise e.g. a hard disk, a CD ROM disc, a memory stick, an optical storage device, a magnetic storage device or any other appropriate medium comprising a persistent or non-persistent memory such as a disk or tape that may hold machine readable data. The computer program product may furthermore be provided as computer program code on a server and downloaded to the first network node 110 remotely, e.g. over an Internet or an intranet connection.

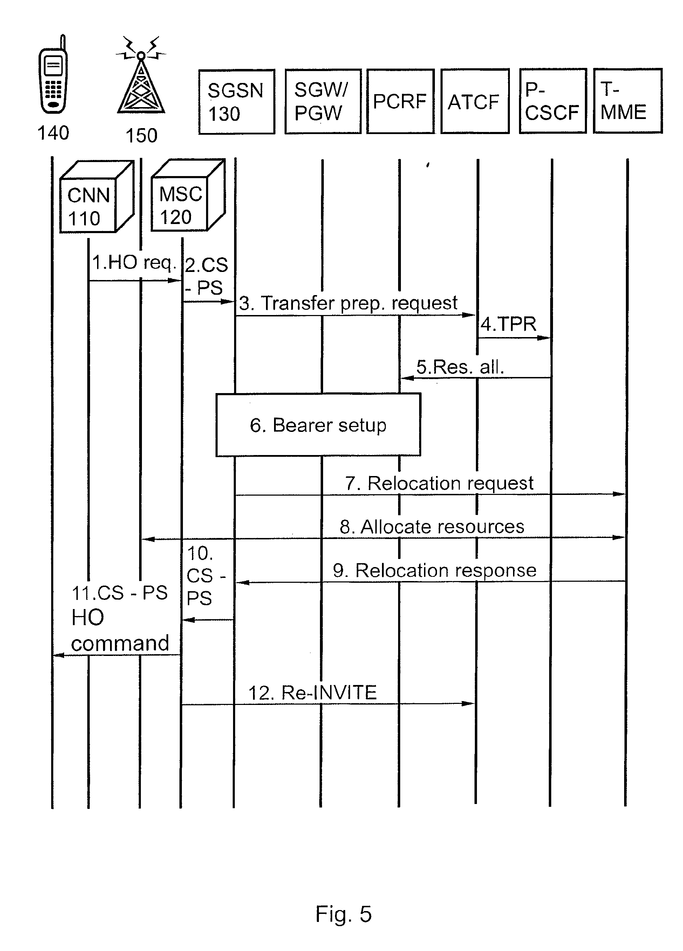

**Figure 5** is a combined flow chart and block diagram illustrating an example of an embodiment of the disclosed methods. Figure 5 shows a call flow concerning how the controlling network node 110 provides the SGSN identity to the Mobile Switching Centre 120 and how the Mobile Switching Centre 120 uses the SGSN identity during SRVCC from GERAN/UTRAN to E-UTRAN.

According to some embodiments, the method may be divided in two steps, where the first step concerns how to make it possible for the mobile station 140 to send the TLLI when it accesses the circuit switched domain, for example at a call setup or Location / Routing Area Registration updating. The TLLI may for example be comprised in the Radio Resource Control (RRC) protocol or in the Mobility Management (MM) layer protocol.

The controlling network node 110, which thus may comprise a BSC /RNC may store the latest and from the mobile station 140 received TLLI during an ongoing circuit switched connection. To be able to distribute the TLLI from the mobile station 140 to the controlling network node 110, the RRC or MM protocol may be updated. The controlling network node 110 may then extract the SGSN identity, such as e.g. Network Service Entity Identifier (NSEI) from the TLLI, e.g. by using the SGSN selection method according to some embodiments.

The second step concerns how to update the Mobile Switching Centre 120 with the correct SGSN identity from the controlling network node 110. That is, when the handover to LTE is to be performed, which may be decided based on one or more measurement reports, the controlling network node 110 may inform the Mobile Switching Centre 120 about the current SGSN identity, e.g., with an information element in the Base Station System Management Application Part (BSSMAP) / Radio Access Network Application Part (RANAP) Handover Required message, according to some embodiments.

To be able to support the Mobile Switching Centre 120 with current SGSN identity when handover to LTE is to be performed, the current TLLI or SGSN identity may be distributed between the serving controlling network node 110 to the target controlling network node 160 at an inter BSC/RNC handover. That is, the BSSMAP/RANAP Handover Required/Relocation Required and Handover Request/Relocation Request messages may be updated to be able to carry the current TLLI according to some embodiments.

The following describes twelve actions that may be performed when identifying a serving GPRS support node 130 of a mobile station 140, according to some embodiments as illustrated in Figure 5. In the non-limiting example is illustrated how the controlling network node 110 may provide the SGSN identity to the Mobile Switching Centre 120 and how the Mobile Switching Centre 120 may use the SGSN identity during SRVCC from GERAN/UTRAN to E-UTRAN. It may be noted that some of the described actions 1-12 may be performed in some alternative embodiments. Further, it may be noted that some of the described actions 1-12 may be performed simultaneously, or in a somewhat rearranged chronological order.

### Action 1

The controlling network node 110 sends a handover (HO) required message to the MSC Server 120, which message comprises an indication the handover is to be made for SRVCC. The controlling network node 110 may add the SGSN identity into the message. Since the packet switched bearers are suspended in this example, no handover required may be send by the radio access network to the source SGSN 130. If the MSC Server 120 is the target MSC, it may forward the handover required to the anchor MSC Server.

### Action 2

The MSC Server 120 sends a SRVCC circuit switched to packet switched handover command to the Source SGSN 130 using the SGSN identity received from the controlling network node 110 in action 1. Alternatively, the MSC Server 120 may then derive the address from the SGSN identity and/or perform address lookup.

### Action 3

The MSC Server 120 may send a Transfer Preparation Request to the Access Transfer Control Function (ATCF) that indicates to the ATCF that it may prepare for the transfer of media to packet switch.

### Action 4

The ATCF may forward the Transfer Preparation Request to the Proxy-Call Session Control Function (P-CSCF), after having added in that message the Internet Protocol (IP) address/ports the mobile station 140 intends to use after rSRVCC, as well as the IP address/ports the Access Transfer Gateway (ATGW) is sending voice media to. For example, according to some embodiments, the Session Description Protocol (SDP) for both the mobile station 140 and the ATGW may be comprised in the message.

### Action 5

The P-CSCF may interact with the Policy and Charging Rules Function (PCRF) to establish a voice bearer for the session being transferred using the information received from the ATCF in the Transfer Preparation Request message. The PCC may indicate that this bearer establishment is due to rSRVCC.

The Transfer Preparation Request message may e.g., be implemented using an INVITE or any other corresponding appropriate message type, according to different embodiments.

### Action 6

The PCRF may initiate the bearer setup towards the Packet data network Gateway (P-GW). Once the bearer setup reaches source SGSN 130, the SGSN 130 may associate the new bearer with the handover from circuit switched to packet switched request that was received previously.

### Action 7

Source SGSN 130 may send a relocation request to the target SGSN/MME.

### Action 8

Target SGSN/MME may allocate resources in UTRAN/E-UTRAN.

### Action 9

A relocation response may be returned to the Source SGSN 130.

### Action 10

A SRVCC circuit switched to packet switched handover response may be returned from the Source SGSN 130 to the MSC Server 120.

### Action 11

MSC Server 120 may send handover required acknowledgement (ACK) to the radio access network, possibly via the target MSC, and the radio access network send handover command to the mobile station 140, indicating circuit switched to packet switched handover. This may comprise additional information such as the IP address the mobile station 140 may send the media to, and codec used.

### Action 12

The MSC Server 120 may send a re-INVITE to the ATCF to trigger the ATCF/ATGW to have the media path switched to the Internet Protocol (IP) address/port of the mobile station 140 on the target access.

When using the formulation "comprise" or "comprising" within the present context, it is to be interpreted as non- limiting, i.e. meaning "consist at least of". The present methods and arrangements are not limited to the above described preferred embodiments. Various alternatives, modifications and equivalents may be utilised. Therefore, the above embodiments are not to be taken as limiting the scope of claimed protection, which instead is to be defined by the appending claims.

## Claims

1. A method in a first network node (110, 120), for identifying a serving General Packet Radio Services, GPRS, support node (130) of a mobile station (140), the method comprising:
acquiring (301) a Temporary Link Layer Identifier, TLLI, and
identifying (302) the serving GPRS, support node (130) of the mobile station (140) by deriving the identity of the serving GPRS support node (130) from the acquired (301) TLLI, wherein the TLLI is acquired (301) as the mobile station (140) accesses a circuit switched domain.

2. The method according to claim 1, wherein the first network node (110, 120) is a Mobile Switching Centre (120) and the TLLI is acquired (301) from a controlling network node (110) of the mobile station (140), such as a Base Station Controller or a Radio Network Controller.

3. The method according to claim 1, further comprising:
providing (303) the identity of the serving GPRS support node (130) to a second network node (120).

4. The method according to any of claim 1 or claim 3, wherein the first network node (110, 120) is a controlling network node (110) of the mobile station (140), such as a Base Station Controller or a Radio Network Controller and the second network node (120) is a Mobile Switching Centre (120), and wherein the TLLI is acquired (301) by the controlling network node (110) from the mobile station (140).

5. The method according to any of the claims 1-4, wherein
the TLLI is comprised in any of a radio resource control protocol or a mobility management layer protocol, and wherein the controlling network node (110) of the mobile station (140) is configured to receive and store the latest TLLI of the mobile station (140) during a circuit switched connection.

6. The method according to any of the claims 3-5, where the controlling network node (110) of the mobile station (140) identifies (302) the serving GPRS support node (130) of the mobile station (140) by using the serving GPRS support node selection method.

7. The method according to any of the claims 3-6, wherein the identity of the serving GPRS support node (130) is provided (303) to the Mobile Switching Centre (120) when a handover of the mobile station (140) is made to packet access, and wherein the identity of the serving GPRS support node (130) is provided (303) to the Mobile Switching Centre (120) in an information element comprised in any of a handover required message or relocation required message.

8. The method according to any of the claims 1-7, wherein the identity of the serving GPRS support node (130) is distributed from the serving controlling network node (110) of the mobile station (140), to the target controlling network node (160) when the mobile station (140) is performing an inter controlling network node handover, and wherein the identity of the serving GPRS support node (130) is comprised in a handover required message, a relocation required message, a handover request message and/or a relocation request message.

9. The method according to any of the claims 1-8, wherein the Mobile Switching Centre (120) is configured for utilising the identity of the serving GPRS support node (130) of the mobile station (140) during reverse single radio voice call continuity from a Radio Access Network based on Global System for Mobile Communications, GSM, or Universal Mobile Telecommunications System, UMTS, to a Radio Access Network based on Long Term Evolution, LTE.

10. A first network node (110, 120), for determining a serving General Packet Radio Services, GPRS, support node (130) of a mobile station (140), the first network node (110, 120) comprising:
a receiver (410), configured for acquiring a Temporary Link Layer Identifier, TLLI, and
a processing circuitry (420), configured for identifying the serving GPRS support node (130) of the mobile station (140) by deriving the identity of the serving GPRS support node (130) from the acquired TLLI,
wherein the receiver (410) is configured for acquiring the TLLI as the mobile station (140) accesses a circuit switched domain.

11. The first network node (110, 120), according to claim 10, wherein the first network node (110, 120) is a Mobile Switching Centre (120) and the receiver (410) is configured for acquiring the TLLI from a controlling network node (110) of the mobile station (140), such as a Base Station Controller or a Radio Network Controller.

12. The first network node (110, 120), according to claim 10, further comprising:
a transmitter (430), configured for providing the identity of the serving GPRS support node (130) to a second network node (120).

13. The first network node (110, 120), according to any of claim 10 or claim 12, wherein the first network node (110, 120) is a controlling network node (110) of the mobile station (140), such as a Base Station Controller or a Radio Network Controller, and the second network node (120) is a Mobile Switching Centre (120), and wherein the receiver (410) is configured for acquiring the TLLI from the mobile station (140).

14. The first network node (110, 120), according to any of the claims 10-13, wherein
the TLLI is comprised in any of a radio resource control protocol or a mobility management layer protocol and wherein the controlling network node (110) of the mobile station (140) is configured to receive and store the latest TLLI of the mobile station (140) during a circuit switched connection.

15. The first network node (110, 120), according to any of the claims 12-14, where the processing circuitry (420) of the controlling network node (110) of the mobile station (140) is configured to identify the serving GPRS support node (130) of the mobile station (140) by using the serving GPRS support node selection method.

16. The first network node (110, 120), according to any of the claims 12-15, wherein the transmitter (430) of the controlling network node (110) of the mobile station (140) is configured to provide the identity of the serving GPRS support node (130) to the Mobile Switching Centre (120) when a handover of the mobile station (140) is made to Long Term Evolution, LTE, and wherein the transmitter (430) of the controlling network node (110) of the mobile station (140) is configured to provide the identity of the serving GPRS support node (130) to the Mobile Switching Centre (120) in an information element comprised in any of a handover required message or a relocation required message.

17. The first network node (110, 120), according to any of the claims 12-16, wherein the transmitter (430) of the serving controlling network node (110) of the mobile station (140) is configured to distribute the identity of the serving GPRS support node (130) of the mobile station (140) to the target controlling network node (160) when the mobile station (140) is performing an inter controlling network node handover, and wherein the identity of the serving GPRS support node (130) is comprised in a handover required message, a relocation required message, a handover request message and/or a relocation request message.

18. The first network node (110, 120), according to any of the claims 10-17, wherein the Mobile Switching Centre (120) is configured for utilising the identity of the serving GPRS support node (130) of the mobile station (140) during reverse single radio voice call continuity from a Radio Access Network based on Global System for Mobile Communications, GSM, or Universal Mobile Telecommunications System, UMTS, to a Radio Access Network based on Long Term Evolution, LTE.

## Patentansprüche

1. Verfahren in einem ersten Netzknoten (110, 120) zum Identifizieren eines versorgenden Unterstützungsknotens (130) für allgemeine paketvermittelte Funkdienste, GPRS, einer Mobilstation (140), wobei das Verfahren umfasst:
Erwerben (301) einer temporären Sicherungsschichtkennung, TLLI, und
Identifizieren (302) des versorgenden GPRS-Unterstützungsknotens (130) der Mobilstation (140) durch Ableiten der Identität des versorgenden GPRS-Unterstützungsknotens (130) von der erworbenen (301) TLLI, wobei die TLLI erworben wird (301), wenn die Mobilstation (140) auf eine leitungsvermittelte Domäne zugreift.

2. Verfahren nach Anspruch 1, wobei der erste Netzknoten (110, 120) eine Mobilvermittlungsstelle (120) ist, und die TLLI von einem Steuernetzknoten (110) der Mobilstation (140), wie beispielsweise einer Basisstationssteuerung oder einer Funknetzsteuerung, erworben wird (301).

3. Verfahren nach Anspruch 1, ferner umfassend:
Liefern (303) der Identität des versorgenden GPRS-Unterstützungsknotens (130) an einen zweiten Netzknoten (120).

4. Verfahren nach einem der Ansprüche 1 oder 3, wobei der erste Netzknoten (110, 120) ein Steuernetzknoten (110) der Mobilstation (140), wie beispielsweise eine Basisstationssteuerung oder eine Funknetzsteuerung, ist, und der zweite Netzknoten (120) eine Mobilvermittlungsstelle (120) ist, und wobei die TLLI durch den Steuernetzknoten (110) von der Mobilstation (140) erworben wird (301).

5. Verfahren nach einem der Ansprüche 1 bis 4, wobei
die TLLI in einem von einem Funkbetriebsmittelsteuerungsprotokoll oder einem Mobilitätsverwaltungsschichtprotokoll enthalten ist, und wobei der Steuernetzknoten (110) der Mobilstation (140) so konfiguriert ist, dass er die letzte TLLI der Mobilstation (140) während einer leitungsvermittelten Verbindung empfängt und speichert.

6. Verfahren nach einem der Ansprüche 3 bis 5, wobei der Steuernetzknoten (110) der Mobilstation (140) den versorgenden GPRS-Unterstützungsknoten (130) der Mobilstation (140) durch Verwenden des Verfahrens zur Auswahl von versorgenden GPRS-Unterstützungsknoten identifiziert (302).

7. Verfahren nach einem der Ansprüche 3 bis 6, wobei die Identität des versorgenden GPRS-Unterstützungsknotens (130) an die Mobilvermittlungsstelle (120) geliefert wird (303), wenn ein Handover der Mobilstation (140) zu Paketzugang durchgeführt wird, und wobei die Identität des versorgenden GPRS-Unterstützungsknotens (130) in einem Informationselement, das in einer von einer Handover-Bedarfsnachricht oder einer Standortwechselbedarfsnachricht enthalten ist, an die Mobilvermittlungsstelle (120) geliefert wird (303).

8. Verfahren nach einem der Ansprüche 1 bis 7, wobei die Identität des versorgenden GPRS-Unterstützungsknotens (130) vom versorgenden Steuernetzknoten (110) der Mobilstation (140) an den Ziel-Steuernetzknoten (160) verteilt wird, wenn die Mobilstation (140) ein Handover zwischen Steuernetzknoten durchführt, und wobei die Identität des versorgenden GPRS-Unterstützungsknotens (130) in einer Handover-Bedarfsnachricht, einer Standortwechselbedarfsnachricht, einer Handover-Anforderungsnachricht und/oder einer Standortwechselanforderungsnachricht enthalten ist.

9. Verfahren nach einem der Ansprüche 1 bis 8, wobei die Mobilvermittlungsstelle (120) so konfiguriert ist, dass sie die Identität des versorgenden GPRS-Unterstützungsknotens (130) der Mobilstation (140) während Einzelfunksprachverbindungs-Rückwärtskontinuität von einem Funkzugangsnetz, das auf dem globalen System für Mobilkommunikationen, GSM, oder dem universellen Mobilfunk-Telekommunikationssystem, UMTS, basiert, zu einem Funkzugangsnetz verwendet, das auf Long Term Evolution, LTE, basiert.

10. Erster Netzknoten (110, 120) zum Bestimmen eines versorgenden Unterstützungsknotens (130) für allgemeine paketvermittelte Funkdienste, GPRS, einer Mobilstation (140), wobei der erste Netzknoten (110, 120) umfasst:
einen Empfänger (410) der so konfiguriert ist, dass er eine temporäre Sicherungsschichtkennung, TLLI, erwirbt, und
eine Verarbeitungsschaltungsanordnung (420), die so konfiguriert ist, dass sie den versorgenden GPRS-Unterstützungsknoten (130) der Mobilstation (140) durch Ableiten der Identität de versorgenden GPRS-Unterstützungsknotens (130) von der erworbenen TLLI identifiziert,
wobei der Empfänger (410) so konfiguriert ist, dass er die TLLI erwirbt, wenn die Mobilstation (140) auf eine leitungsvermittelte Domäne zugreift.

11. Erster Netzknoten (110, 120) nach Anspruch 10, wobei der erste Netzknoten (110, 120) eine Mobilvermittlungsstelle (120) ist, und der Empfänger (410) so konfiguriert ist, dass er die TLLI von einem Steuernetzknoten (110) der Mobilstation (140), wie beispielsweise einer Basisstationssteuerung oder einer Funknetzsteuerung, erwirbt.

12. Erster Netzknoten (110, 120) nach Anspruch 10, ferner umfassend:
einen Sender (430), der so konfiguriert ist, dass er die Identität des versorgenden GPRS-Unterstützungsknotens (130) an einen zweiten Netzknoten (120) liefert.

13. Erster Netzknoten (110, 120) nach einem der Ansprüche 10 oder 12,
wobei der erste Netzknoten (110, 120) ein Steuernetzknoten (110) der Mobilstation (140), wie beispielsweise eine Basisstationssteuerung oder eine Funknetzsteuerung, ist, und der zweite Netzknoten (120) eine Mobilvermittlungsstelle (120) ist, und wobei der Empfänger (410) so konfiguriert ist, dass er die TLLI von der Mobilstation (140) erwirbt.

14. Erster Netzknoten (110, 120) nach einem der Ansprüche 10 bis 13, wobei
die TLLI in einem von einem Funkbetriebsmittelsteuerungsprotokoll oder einem Mobilitätsverwaltungsschichtprotokoll enthalten ist, und wobei der Steuernetzknoten (110) der Mobilstation (140) so konfiguriert ist, dass er die letzte TLLI der Mobilstation (140) während einer leitungsvermittelten Verbindung empfängt und speichert.

15. Erster Netzknoten (110, 120) nach einem der Ansprüche 12 bis 14, wobei die Verarbeitungsschaltungsanordnung (420) des Steuernetzknotens (110) der Mobilstation (140) so konfiguriert ist, dass sie den versorgenden GPRS-Unterstützungsknoten (130) der Mobilstation (140) durch Verwenden des Verfahrens zur Auswahl von versorgenden GPRS-Unterstützungsknoten identifiziert.

16. Erster Netzknoten (110, 120) nach einem der Ansprüche 12 bis 15, wobei der Sender (430) des Steuernetzknotens (110) der Mobilstation (140) so konfiguriert ist, dass er die Identität des versorgenden GPRS-Unterstützungsknotens (130) an die Mobilvermittlungsstelle (120) liefert, wenn ein Handover der Mobilstation (140) zu Long Term Evolution, LTE, durchgeführt wird, und wobei der Sender (430) des Steuernetzknotens (110) der Mobilstation (140) so konfiguriert ist, dass er die Identität des versorgenden GPRS-Unterstützungsknotens (130) in einem Informationselement, das in einer von einer Handover-Bedarfsnachricht oder einer Standortwechselbedarfsnachricht enthalten ist, an die Mobilvermittlungsstelle (120) liefert.

17. Erster Netzknoten (110, 120) nach einem der Ansprüche 12 bis 16, wobei der Sender (430) des versorgenden Steuernetzknotens (110) der Mobilstation (140) so konfiguriert ist, dass er die Identität des versorgenden GPRS-Unterstützungsknotens (130) der Mobilstation (140) an den Ziel-Steuernetzknoten (160) verteilt, wenn die Mobilstation (140) ein Handover zwischen Steuernetzknoten durchführt, und wobei die Identität des versorgenden GPRS-Unterstützungsknotens (130) in einer Handover-Bedarfsnachricht, einer Standortwechselbedarfsnachricht, einer Handover-Anforderungsnachricht und/oder einer Standortwechselanforderungsnachricht enthalten ist.

18. Erster Netzknoten (110, 120) nach einem der Ansprüche 10 bis 17, wobei die Mobilvermittlungsstelle (120) so konfiguriert ist, dass sie die Identität des versorgenden GPRS-Unterstützungsknotens (130) der Mobilstation (140) während Einzelfunksprachverbindungs-Rückwärtskontinuität von einem Funkzugangsnetz, das auf dem globalen System für Mobilkommunikationen, GSM, oder dem universellen Mobilfunk-Telekommunikationssystem, UMTS, basiert, zu einem Funkzugangsnetz verwendet, das auf Long Term Evolution, LTE, basiert.

## Revendications

1. Procédé dans un premier noeud de réseau (110, 120) pour identifier un noeud de prise en charge GPRS, general packet radio services, de desserte (130) d'une station mobile (140), le procédé comprenant de:
acquérir (301) un identifiant de couche de liaison temporaire, TLLI, et
identifier (302) le noeud de prise en charge GPRS de desserte (130) de la station mobile (140) en déduisant l'identité du noeud de prise en charge GPRS de desserte (130) du TLLI (301) acquis, dans lequel le TLLI est acquis (301) lorsque la station mobile (140) accède à un domaine à commutation de circuits.

2. Procédé selon la revendication 1, dans lequel le premier noeud de réseau (110,120) est un centre de commutation pour les services mobiles (120) et le TLLI est acquis (301) d'après un noeud de réseau de commande (110) de la station mobile (140), comme un contrôleur de station de base ou un contrôleur de radioréseau.

3. Procédé selon la revendication 1, comprenant en outre de:
fournir (303) l'identité du noeud de prise en charge GPRS de desserte (130) à un second noeud de réseau (120).

4. Procédé selon une quelconque des revendications 1 ou 3, dans lequel le premier noeud de réseau (110,120) est un noeud de réseau de commande (110) de la station mobile (140), comme un contrôleur de station de base ou un contrôleur de radioréseau et le second noeud de réseau (120) est un centre de commutation pour les services mobiles (120), et dans lequel le TLLI est acquis (301) par le noeud de réseau de commande (110) depuis la station mobile (140).

5. Procédé selon une quelconque des revendications 1-4, dans lequel
le TLLI est compris dans n'importe lequel d'un protocole de commande de ressources radio ou un protocole de couche de gestion de mobilité, et dans lequel le noeud de réseau de commande (110) de la station mobile (140) est configuré afin de recevoir et mémoriser le TLLI le plus récent de la station mobile (140) pendant une connexion à commutation de circuits.

6. Procédé selon une quelconque des revendications 3-5, dans lequel le noeud de réseau de commande (110) de la station mobile (140) identifie (302) le noeud de prise en charge GPRS de desserte (130) de la station mobile (140) en utilisant le procédé de sélection de noeud de prise en charge GPRS de desserte.

7. Procédé selon une quelconque des revendications 3-6, dans lequel l'identité du noeud de prise en charge GPRS de desserte (130) est fournie (303) par le centre de commutation pour les services mobiles (120), quand un transfert intercellulaire de la station mobile (140) est fait pour accéder aux paquets, et dans lequel l'identité du noeud de prise en charge GPRS de desserte (130) est fournie (303) au centre de commutation pour les services mobiles (120) dans un élément d'information compris dans n'importe lequel d'un message requis pour transfert intercellulaire ou un message requis pour relocalisation.

8. Procédé selon une quelconque des revendications 1-7, dans lequel l'identité du noeud de prise en charge GPRS de desserte (130) est distribuée depuis le noeud de réseau de commande de desserte (110) de la station mobile (140) vers le noeud de réseau de commande cible (160) quand la station mobile (140) effectue un transfert intercellulaire entre noeuds de réseau de commande, et dans lequel l'identité du noeud de prise en charge GPRS de desserte (130) est comprise dans un message requis pour transfert intercellulaire, un message requis pour relocalisation, un message de demande de transfert intercellulaire et/ou un message de demande de relocalisation.

9. Procédé selon une quelconque des revendications 1-8, dans lequel le centre de commutation pour les services mobiles (120) est configuré pour utiliser l'identité du noeud de prise en charge GPRS de desserte (130) de la station mobile (140) pendant une continuité d'appel vocal radio unique inverse depuis un réseau d'accès radio basé sur GSM, global system for mobile communications, ou UMTS, universal mobile telecommunications system, vers un réseau d'accès radio basé sur évolution à long terme, LTE.

10. Premier noeud de réseau (110,120) pour déterminer un noeud de prise en charge GPRS, general packet radio services, de desserte (130) d'une station mobile (140), le premier noeud de réseau (110,120) comprenant:
un récepteur (410) configuré pour acquérir un identifiant de couche de liaison temporaire, TLLI, et
un circuit de traitement (420) configuré pour identifier le noeud de prise en charge GPRS de desserte (130) de la station mobile (140) en déduisant l'identité du noeud de prise en charge GPRS de desserte (130) d'après le TLLI acquis,
dans lequel le récepteur (410) est configuré pour acquérir le TLLI lorsque la station mobile accède à un domaine à commutation de circuits.

11. Premier noeud de réseau (110,120) selon la revendication 10, dans lequel le premier noeud de réseau (110,120) est un centre de commutation pour les services mobiles (120) et le récepteur (410) est configuré pour acquérir le TLLI depuis un noeud de réseau de commande (110) de la station mobile (140), comme le contrôleur de station de base ou un contrôleur de radioréseau.

12. Premier noeud de réseau (110,120) selon la revendication 10, comprenant en outre:
un émetteur (430), configuré pour fournir l'identité du noeud de prise en charge GPRS de desserte (130) à un second noeud de réseau (120).

13. Premier noeud de réseau (110, 120) selon une quelconque des revendications 10 ou 12,
dans lequel le premier noeud de réseau (110,120) est un noeud de réseau de commande (110) de la station mobile (140), comme un contrôleur de station de base ou un contrôleur de radioréseau, et le second noeud de réseau (120) est un centre de commutation pour les services mobiles (120), et dans lequel le récepteur (410) est configuré pour acquérir le TLLI depuis la station mobile (140).

14. Premier noeud de réseau (110, 120) selon une quelconque des revendications 10-13,
dans lequel le TLLI est compris dans n'importe lequel d'un protocole de commande de ressources radio ou un protocole de couche de gestion de mobilité, et dans lequel le noeud de réseau de commande (110) de la station mobile (140) est configuré afin de recevoir et mémoriser le TLLI le plus récent de la station mobile (140) pendant une connexion à commutation de circuits.

15. Premier noeud de réseau (110, 120) selon une quelconque des revendications 12-14, dans lequel le circuit de traitement (420) du noeud de réseau de commande (110) de la station mobile (140) est configuré afin d'identifier le noeud de prise en charge GPRS de desserte (130) de la station mobile (140) en utilisant le procédé de sélection de prise en charge GPRS de desserte.

16. Premier noeud de réseau (110, 120) selon une quelconque des revendications 12-15, dans lequel l'émetteur (430) du noeud de réseau de commande (110) de la station mobile (140) est configuré afin de fournir l'identité du noeud de prise en charge GPRS de desserte (130) au centre de commutation pour les services mobiles (120) quand un transfert intercellulaire de la station mobile (140) est fait à l'évolution à long terme, LTE, et dans lequel l'émetteur (430) du noeud de réseau de commande (110) de la station mobile (140) est configuré afin de fournir l'identité du noeud de prise en charge GPRS de desserte (130) au centre de commutation pour les services mobiles (120) dans un élément d'information compris dans n'importe lequel d'un message requis pour transfert intercellulaire ou un message requis de relocalisation.

17. Premier noeud de réseau (110, 120) selon une quelconque des revendications 12-16, dans lequel l'émetteur (430) du noeud de réseau de commande de desserte (110) de la station mobile (140) est configuré afin de distribuer l'identité du noeud de prise en charge GPRS de desserte (130) de la station mobile (140) au noeud de réseau de commande cible (160) quand la station mobile (140) effectue un transfert intercellulaire entre noeuds de réseau de commande, et dans lequel l'identité du noeud de prise en charge GPRS de desserte (130) est comprise dans un message requis pour transfert intercellulaire, un message requis pour relocalisation, un message de demande de transfert intercellulaire et/ou un message de demande de relocalisation.

18. Premier noeud de réseau (110, 120) selon une quelconque des revendications 10-17, dans lequel le centre de commutation pour les services mobiles (120) est configuré afin d'utiliser l'identité du noeud de prise en charge GPRS de desserte (130) de la station mobile (140) pendant une continuité d'appel vocal radio unique inverse depuis un réseau d'accès radio basé sur GSM, global system for mobile communications, ou UMTS, universal mobile telecommunications system, vers un réseau d'accès radio basé sur évolution à long terme, LTE.
